# EUROPÄISCHE PATENTANMELDUNG

(11) **EP 4 718 676 A1**
(43) Veröffentlichungstag der Anmeldung: **01.04.2026**
(21) Anmeldenummer: 25201875.9
(22) Anmeldetag: 12.09.2025
(51) Int. Cl.: H02J 7/40, H01M 10/42, H01M 50/247, H02J 7/70

(54) **SYSTEM MIT ZUMINDEST EINEM AKKUMULATOR UND EINEM ENDGERÄT, VERFAHREN ZUM BETREIBEN EINES ENDGERÄTS MIT EINEM AKKUMULATOR, AKKUMULATOR UND VERWENDUNG EINES AKKUMULATORS**

(30) Priorität: 27.09.2024 DE 102024128084
(71) Anmelder: Einhell Germany AG, 94405 Landau / Isar (DE)
(72) Erfinder: Thannhuber, Markus, 94405 Landau (DE); Szekacs, Endre, 94363 Oberschneiding (DE); Fech, Daniel, 86647 Buttenwiesen (DE)
(74) Vertreter: Canzler & Bergmeier Patentanwälte Partnerschaft mbB

(57) **Zusammenfassung**

Die vorliegende Erfindung betrifft ein System (1) mit zumindest einem Akkumulator (2), insbesondere einem loT-Akkumulator. Der Akkumulator (2) umfasst zumindest eine Steuereinheit (4) und eine Akkudatenschnittstelle (5). Das System (1) umfasst ferner ein Endgerät (6) mit zumindest einer Endgerätesteuereinheit (7) und einer Endgerätedatenschnittstelle (8). Der Akkumulator (2) und das Endgerät (6) sind zur Energieübertragung verbunden. Außerdem sind die Akkudatenschnittstelle (5) und die Endgerätedatenschnittstelle (8) zur insbesondere bidirektionalen Übertragung von Steuerungsdaten verbunden.

## Beschreibung

Die vorliegende Erfindung betrifft ein System mit zumindest einem Akkumulator, insbesondere einem IoT-Akkumulator. Der Akkumulator umfasst zumindest eine Steuereinheit und zumindest eine Akkudatenschnittstelle. Das System umfasst ferner ein Endgerät mit zumindest einer Endgerätesteuereinheit und einer Endgerätedatenschnittstelle. Der Akkumulator und das Endgerät sind zur Energieübertragung verbunden. Außerdem sind die Akkudatenschnittstelle und die Endgerätedatenschnittstelle zur insbesondere bidirektionalen Übertragung von Steuerungsdaten verbunden.

Gattungsgemäße Systeme sind seit langem bekannt. Beispielsweise akkumulatorbetriebene Elektrowerkzeuge sind ein wichtiger Bestandteil handwerklicher Arbeit. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Ackumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Es ist daher wünschenswert, Akkumulatoren mit zusätzlichen Funktionen als Kaufargument auszustatten, womit den Akkumulatoren selbst, aber eventuell auch den damit betriebenen Endgeräten ein Marktvorteil verliehen wird. Aufgabe der vorliegenden Erfindung ist es daher, das bekannte System derart weiterzubilden, dass dem Akkumulator über eine reine Energieversorgung hinausreichende Funktionen ermöglicht werden.

Die Aufgabe wird gelöst durch ein System, ein Verfahren, einen Akkumulator und/oder dessen Verwendung mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein System mit beispielsweise zumindest einem Akkumulator, insbesondere IoT-Akkumulator. Der Akkumulator weist vorzugsweise zumindest eine Steuereinheit auf. Die Steuereinheit dient beispielsweise der Überwachung und/oder der Steuerung des Akkumulators. Insbesondere wird von der Steuereinheit die Einhaltung vorgegebener, sicherheitsrelevanter Betriebsparameter sichergestellt. Außerdem kann der Akkumulator zumindest eine Akkudatenschnittstelle umfassen, die beispielsweise dem insbesondere bidirektionalen Datenaustausch mit Endgeräten und eventuell weiteren Vorrichtungen dient.

Das System kann ein Endgerät umfassen, das insbesondere mittels des Ackumulators betrieben wird. Hierzu sind der Akkumulator und das Endgerät insbesondere zur Energieübertragung verbunden. Das Endgerät umfasst vorzugsweise zumindest eine Endgerätesteuereinheit, die beispielsweise der Steuerung des Endgeräts dient, und insbesondere eine Endgerätedatenschnittstelle, die beispielsweise dem Datenaustausch mit dem Akkumulator und eventuell weiteren Vorrichtungen dient. Die Akkudatenschnittstelle und die Endgerätedatenschnittstelle sind insbesondere zur Übertragung von Steuerungsdaten verbunden.

Die Möglichkeit zur Übertragung von Steuerungsdaten zwischen dem Akkumulator und dem Endgerät erlaubt es, den Akkumulator mit zusätzlichen Funktionen zu versehen. Somit können eventuell auch komplexe Steuerungsaufgaben beispielsweise von dem Endgerät in den Akkumulator verlagert werden. Hierdurch können Endgeräte einfacher und kostengünstiger ausgebildet werden. Eine komplexere Ausführung des Akkumulators kann durch den Einsatz bei einer Vielzahl von verschiedenen Endgeräten gerechtfertigt sein und hierdurch leichter von einem Benutzer akzeptiert werden. Falls der Akkumulator als zentrale Bedienungsschnittstelle für eine Vielzahl von Endgeräten dient, kann hierdurch der Umgang mit verschiedenen Endgeräten erleichtert werden.

Der Akkumulator umfasst vorzugsweise wenigstens eine Akkumulatorzelle zur Aufnahme, Speicherung und Abgabe von Energie. Die Akkumulatorzelle stellt insbesondere die Grundfunktion des Akkumulators, das Betreiben von angeschlossenen Endgeräten, bereit. Der Akkumulator kann je nach Energiekapazität unterschiedlich viele Akkumulatorzellen aufweisen. Der Akkumulator umfasst beispielsweise wenigstens zwei Akkumulatorzellen. Die Akkumulatorzellen sind insbesondere durch ein an den Akkumulator angeschlossenes Ladegerät wiederaufladbar.

In einer vorteilhaften Weiterbildung der Erfindung ist die zumindest eine Steuereinheit eine IoT-Steuereinheit. Eine IoT-Steuereinheit zeichnet sich beispielsweise durch Kommunikationsfähigkeiten mit weiteren Vorrichtungen, wie insbesondere anderen Akkumulatoren und/oder Unterhaltungselektronikvorrichtungen, aus. Der Akkumulator kann hierdurch insbesondere in das Internet der Dinge (engl. "Internet of Things", IoT) integriert werden, was den Funktionsumfang des Akkumulators stark erhöht. Der Informationsaustausch mit anderen Vorrichtungen kann die Interaktionsmöglichkeiten eines Benutzers des Akkumulators stark erhöhen. Benutzer können über die IoT-Steuereinheit beispielsweise direkt Einfluss auf die Steuerungsparameter des Akkumulators nehmen. Dies kann beispielsweise die Festlegung von Ladezeitfenstern, die Priorisierung bestimmter Verbraucher oder die Anpassung von Leistungsprofilen umfassen.

Des Weiteren ist es vorteilhaft, wenn die zumindest eine Steuereinheit eine Programmierschnittstelle umfasst. Die Programmierschnittstelle erlaubt es einem Benutzer des Systems beispielsweise Steuerungsdaten für den Akkumulator und/oder das Endgerät als einzelne Schritte eines Programmablaufs festzulegen. Hierdurch kann das System benutzerdefiniert und eventuell zumindest teilautomatisiert betrieben werden.

Die Programmierschnittstelle kann insbesondere eine API (Application Programming Interface) bereitstellen, über die externe Anwendungen auf bestimmte Funktionen und Daten des Akkumulators, insbesondere durch die IoT-Steuereinheit, zugreifen können. So kann ein Benutzer beispielsweise Funktionen des Akkumulators über eine Anwendung auf dem Smartphone steuern und Funktionsabläufe bzw. Programme festlegen.

Besondere Vorteile bringt es mit sich, wenn die zumindest eine Steuereinheit des Akkumulators ausgebildet ist, Steuerungsbefehle für die Endgerätesteuereinheit zu erzeugen. Hierdurch wird es möglich, dass das Endgerät von der Steuereinheit des Akkumulators aus gesteuert wird. Wie bereits angedeutet, können "intelligente" Funktionen, die beispielsweise eine Interaktion mit einem Benutzer, insbesondere die Festlegung benutzerdefinierter Betriebsabläufe, von dem Endgerät in den Akkumulator verlagert werden. Der Akkumulator kann damit als zentrale Benutzerschnittstelle für eine Vielzahl von Endgeräten fungieren und die Endgeräte insbesondere aktiv steuern.

Die erzeugten Steuerungsbefehle können beispielsweise einen Zeitpunkt einer Energieübertragung, einen Zeitraum einer Energieübertragung, ein Intervall einer Energieübertragung, einen Betrag einer übertragenen Spannung und/oder einen Betrag einer übertragenen Stromstärke betreffen.

In diesem Zusammenhang ist es aber besonders vorteilhaft, wenn die Steuerungsbefehle Befehle für spezifische Funktionen des Endgeräts umfassen. Gemeint sind hier Funktionen, die sich von Endgerät zu Endgerät unterscheiden und eventuell über die Grundfunktionen des Endgeräts hinausgehen. Diese spezifischen Funktionen können beispielsweise alternative Betriebsmodi, das Verfahren von Stellmotoren und/oder das Festlegen von abstrakten Betriebsparametern, die von der Endgerätesteuereinheit insbesondere in grundlegende Betriebsparameter übersetzt werden müssen, umfassen. Die Steuerungsbefehle für spezifische Funktionen gehen insbesondere über eine reine Energieversorgung des Endgeräts durch den Akkumulator hinaus und erfordern beispielsweise eine Übertragung komplexer Daten zwischen dem Akkumulator und dem Endgerät.

Zu den alternativen Betriebsmodi kann bei einer Lampe beispielsweise die Farbe des abgegebenen Lichts und/oder eine periodische Lichtabgabe als Blinklicht gehören. Bei einem Schlagbohrer kann beispielsweise festgelegt werden, ob eine Schlagfunktion verwendet wird. Eventuell kann eine Bewegungsrichtung des Endgeräts umgekehrt werden. Das Verfahren von Stellmotoren kann beispielsweise die Abstände von, mit Stellmotoren versehenen, Elementen des Endgeräts festlegen. So kann beispielsweise die Schnittlänge eines Rasenmähers durch die Steuereinheit des Akkumulators festgelegt werden. Abstrakte Betriebsparameter können beispielsweise eine Drehzahl, Geschwindigkeit, Frequenz bei einer periodischen Bewegung, Durchflussgeschwindigkeit, Intensität, Druck, Drehmoment und/oder Temperatur umfassen. Diese müssen vor der Umsetzung beispielsweise von der Endgerätesteuereinheit in ein zeitliches Profil von Spannung und Stromstärke umgewandelt werden.

Ebenso bringt es Vorteile mit sich, wenn die zumindest eine Steuereinheit des Akkumulators und die Endgerätesteuereinheit ein Master-Slave-System bilden, wobei die Steuereinheit als Master und die Endgerätesteuereinheit als Slave ausgebildet ist. Hierdurch werden Steuerungsbefehle, die von der Steuereinheit erzeugt werden, beispielsweise grundsätzlich bevorzugt gegenüber denjenigen der Endgerätesteuereinheit ausgeführt. Hierdurch wird ein potenzieller Konflikt zwischen der Steuereinheit und der Endgerätesteuereinheit vermieden. Das Endgerät wird der Kontrolle durch den Akkumulator unterworfen. Dies macht das Verhalten des Systems für einen Benutzer besser vorhersehbar und erhöht die Sicherheit im Umgang mit dem System. Die Kommunikation zwischen Master und Slave kann vorzugsweise über ein standardisiertes Protokoll erfolgen, beispielsweise I²C oder SPI.

Vorteilhaft ist es, wenn die Akkudatenschnittstelle und/oder die Endgerätedatenschnittstelle als drahtgebundene und/oder drahtlose Datenschnittstelle ausgebildet ist. Eine drahtgebundene Datenschnittstelle bietet sich insbesondere für das Endgerät an, da der Akkumulator und das Endgerät zur Energieübertragung physisch verbunden sein müssen. Insbesondere für eine Kommunikation mit weiteren Geräten, bietet sich eine drahtlose Datenschnittstelle an. Die Akkudatenschnittstelle ist also insbesondere sowohl als drahtgebundene als auch als drahtlose Datenschnittstelle ausgebildet oder umfasst sowohl eine drahtgebundene als auch eine drahtlose Datenschnittstelle. Alternativ kann der Akkumulator mehrere Akkudatenschnittstellen umfassen, von denen beispielsweise eine als drahtgebundene Datenschnittstelle und eine als drahtlose Datenschnittstelle ausgebildet ist.

Die drahtgebundene Datenschnittstelle kann beispielsweise in eine Energieschnittstelle zwischen dem Endgerät und dem Akkumulator integriert sein. Die drahtlose Datenschnittstelle kann beispielsweise als Nahfunk- und/oder Fernfunkschnittstelle ausgebildet sein. Die drahtlose Datenschnittstelle kann hierbei beispielsweise die Fernfunktechnologien Sigfox, LoRaWAN, 5G, LTE, Satellitenkommunikation, LTE-M, DASH7, WiFi, HAPS-Mobilfunkstandard, NB-IoT und/oder WiMAX unterstützen. Denkbar ist die Nutzung aller gängigen Mobilfunkstandards, insbesondere 5G, 4G, 3G, 2G, LTE-CAT M. Auch denkbar ist die Nutzung eines eigens entwickelten proprietären Mobilfunkprotokolls. Zusätzlich oder alternativ kann die drahtlose Datenschnittstelle die Nahfunktechnologien Bluetooth, Wi-Fi, Zigbee, NFC, Z-Wave, Infrarot, Thread, Ultra-Wideband, Bluetooth Low Energy, ANT+**,** Wi-Fi Direct und/oder RFID unterstützen.

Eine Nahbereichskommunikation kann von der Akkudatenschnittstelle zur Kommunikation mit Geräten in der Umgebung genutzt werden. Hierzu können beispielsweise weitere Akkumulatoren, Endgeräte und/oder Datenverarbeitungsgeräte, wie insbesondere Unterhaltungselektronikvorrichtungen (Smartphones, Tablets, PCs, etc.) zählen. Die Nahbereichskommunikation kann insbesondere zur Benutzerinteraktion verwendet werden, indem der Benutzer Steuerungsvorgaben für die Steuereinheit des Akkumulators macht und/oder Statusinformationen des Systems abruft.

Eine Fernbereichskommunikation kann von der Akkudatenschnittstelle insbesondere für eine Kommunikation mit dem Internet verwendet werden. Auch über das Internet kann eine Benutzerinteraktion erfolgen, indem Steuerungsvorgaben und/oder Statusinformationen über das Internet übertragen werden. Zusätzlich können über das Internet beispielsweise Updates für die Software des Akkumulators und/oder des Endgeräts abgerufen werden. Auch können Informationen und insbesondere Steuerungsbibliotheken für das Endgerät für eine aktive Steuerung des Endgeräts durch den Akkumulator aus dem Internet abgerufen werden. Durch die Nahbereichs- und/oder Fernbereichskommunikation kann der Akkumulator wie bereits beschrieben in das Internet der Dinge eingegliedert werden. Die Akkudatenschnittstelle kann beispielsweise mit einer Cloud kommunizieren, wobei die Kommunikation insbesondere bidirektional stattfindet. Die Akkudatenschnittstelle kann hierbei sowohl Daten von der Cloud empfangen als auch Daten an die Cloud senden. Der Akkumulator kann beispielsweise eine Außenschnittstelle für eine ansteckbare Außenantenne zur Verbesserung der Signalübertragung aufweisen.

Besonders vorteilhaft ist es, wenn der Akkumulator einen Datenspeicher umfasst. Der Datenspeicher kann beispielsweise vom Hersteller vorgegebene Software und Betriebsparameter des Akkumulators enthalten. Hierdurch werden beispielsweise die grundlegenden Funktionen des Akkumulators sichergestellt. Darüber hinaus kann der Datenspeicher zur Speicherung benutzerdefinierter Daten dienen, wie beispielsweise benutzerdefinierte Steuerungsdaten. Im Datenspeicher können benutzerdefinierte Programmabläufe, die einen zumindest teilautomatisierten Betrieb des Systems ermöglichen, abgelegt sein.

In diesem Zusammenhang ist es besonders vorteilhaft, wenn der Datenspeicher insbesondere in einer Datenbank Informationen zu möglichen Endgeräten umfasst. Hierdurch kann einerseits die Kompatibilität des Endgeräts mit dem Akkumulator unmittelbar geprüft werden. Auch können diese Informationen beispielsweise die bereits erwähnten spezifischen Funktionen des Endgeräts umfassen. Hierdurch wird es der Steuereinheit ermöglicht, ohne einen externen Datenabruf diese spezifischen Funktionen des Endgeräts zu steuern. Insbesondere können die Informationen ebenfalls Funktionen oder Zahlenwerte enthalten, die es ermöglichen, die beschriebenen abstrakten Betriebsparameter in konkrete Leistungsprofile umzuwandeln.

Ebenso bringt es Vorteile mit sich, wenn der Akkumulator als Arbeitsgeräteakkumulator, Gartengeräteakkumulator und/oder als Werkzeuggeräteakkumulator ausgebildet ist, wobei das Endgerät insbesondere als Akkubohrschrauber, Akku-Schlagbohrmaschine, Akku-Winkelschleifer, Akku-Säge, Akku-Hammer, Akku-Rasenmäher, Akku-Trimmer, Akku-Heckenschere, Akku-Laubbläser, Akku-Pumpe, Akkustaubsauger, Akku-Hochdruckreiniger, Akku-Kehrmaschinen, E-Bike, E-Scooter, Elektroroller, Staubsaugerroboter, Kühlbox, Ventilator, Überwachungskamera, Alarmsystem und/oder Beleuchtungssystem ausgebildet ist. Die aufgezählten Typen von Endgeräten können alle von einer aktiven Steuerung durch die Steuereinheit des Akkumulators profitieren, wobei selbstverständlich weitere akkubetriebene Endgeräte für das System in Frage kommen. Die Möglichkeit der Steuerung der Endgeräte durch den Akkumulator hat den zusätzlichen Vorteil, dass benutzerdefinierte Einstellungen, die am Akkumulator vorgenommen worden sind, sofort bei der Verwendung von fremden oder neuen Endgeräten zur Verfügung stehen. Ein Handwerker kann beispielsweise den von ihm konfigurierten Akkumulator von Baustelle zu Baustelle transportieren und die vor Ort verfügbaren Endgeräte sofort mit den eigenen Einstellungen verwenden. Der Akkumulator ist insbesondere als IoT - Arbeitsgeräteakkumulator, IoT-Gartengeräteakkumulator und/oder als IoT-Werkzeuggeräteakkumulator ausgebildet.

Es ist außerdem vorteilhaft, wenn der Akkumulator als mobiler Akkumulator ausgebildet ist, wobei der Akkumulator insbesondere lösbar an dem Endgerät befestigbar ist. Diese Mobilität ermöglicht es, den Akkumulator in verschiedenen Endgeräten zu verwenden und bei Bedarf auszutauschen oder separat aufzuladen.

Der Akkumulator weist hierzu insbesondere eine Befestigungsvorrichtung auf, die beispielsweise mechanische Verbindungselemente zur physischen Befestigung des Akkumulators an einer Endgeräteschnittstelle des Endgeräts umfasst. Die Befestigungsvorrichtung kann beispielsweise einen Schnappmechanismus, eine Schiebeverriegelung und/oder ein Bajonett-System umfassen.

Das erfindungsgemäße Verfahren eignet sich zum Betreiben eines Endgeräts mit einem Akkumulator in einem System, das insbesondere gemäß der vorangegangenen Beschreibung ausgebildet ist, wobei die beschriebenen Merkmale einzeln oder in beliebiger Kombination verwirklicht sein können. Es wird für das Verfahren vorgeschlagen, dass Steuerungsdaten von zumindest einer Steuereinheit des Akkumulators über eine Akkudatenschnittstelle und eine Endgerätedatenschnittstelle an eine Endgerätesteuereinheit des Endgeräts übertragen und/oder Daten von der Endgerätesteuereinheit des Endgeräts über die Endgerätedatenschnittstelle und die Akkudatenschnittstelle an die Steuereinheit des Akkumulators (2) übertragen werden. Wie vorher im Zusammenhang mit dem erfindungsgemäßen System beschrieben, ermöglicht das Verfahren, dass dem Akkumulator erweiterte Steuerungsmöglichkeiten für das Endgerät verliehen werden können. Der Akkumulator kann als zentrale Steuerungsschnittstelle für eine Vielzahl von Endgeräten durch einen Benutzer verwendet werden. Bei kompatiblen Endgeräten kann eventuell auf eine eigene Benutzerschnittstelle verzichtet werden, was es ermöglicht, die Endgeräte einfacher und kostengünstiger auszubilden.

In diesem Zusammenhang ist es besonders vorteilhaft, wenn Steuerungsbefehle, insbesondere Befehle für spezifische Funktionen des Endgeräts, für die Endgerätesteuereinheit von der zumindest einen Steuereinheit erzeugt werden. Der Akkumulator kann das Endgerät, insbesondere inklusive aller spezifischen Funktionen, aktiv steuern.

Besondere Vorteile bringt es mit sich, wenn die Steuerungsbefehle benutzerdefinierte Betriebsprogrammdaten umfassen. Hierdurch können beispielsweise auch komplexe Betriebsabläufe des Endgeräts durch einen Benutzer über eine Benutzerschnittstelle des Akkumulators festgelegt werden. Dies erlaubt einen benutzerdefinierten und/oder teil- oder vollautomatisierten Betrieb des Endgeräts durch den Akkumulator.

Die Betriebsprogrammdaten können beispielsweise von einer externen Bereitstellungseinheit bereitgestellt werden. Die Bereitstellungseinheit ist beispielsweise eine Cloud, ein Smartphone, ein PC und/oder ein Laptop, wobei die Bereitstellungseinheit insbesondere mit der Akkudatenschnittstelle des Akkumulators verbunden ist. Die Bereitstellungseinheit kann eine, insbesondere grafische, Benutzeroberfläche und/oder eine, insbesondere grafische, Programmiersoftware umfassen.

Ebenso ist es vorteilhaft, wenn das Endgerät und dessen spezifische Funktionen von der Steuereinheit identifiziert werden. Einerseits kann hierdurch festgestellt werden, ob das jeweilige Endgerät mit einer aktiven Steuerung durch den Akkumulator kompatibel ist. Andererseits kann der Akkumulator eine benutzerdefinierte Steuerung der spezifischen Funktionen des Endgeräts zur Verfügung stellen.

Eine Möglichkeit der Identifikation des Endgeräts besteht beispielsweise darin, dass das Endgerät bei der Verbindung mit dem Akkumulator eine eindeutige Kennung übermittelt. Diese Kennung kann beispielsweise in Form eines digitalen Identifikationscodes implementiert sein, der insbesondere Informationen über den Gerätetyp und dessen spezifische Funktionen enthält.

Insbesondere bei Endgeräten, die nicht explizit mit den erweiterten Steuerungsfunktionen des Akkumulators kompatibel sind, kann alternativ eine adaptive Identifizierung des Endgeräts erfolgen. Dabei analysiert die Steuereinheit beispielsweise das Lastprofil und die elektrischen Eigenschaften des angeschlossenen Endgeräts, um dessen Typ und Funktionen zu identifizieren.

Nach erfolgreicher Identifikation kann die Steuereinheit des Akkumulators vorzugsweise eine gerätespezifische Datenbank bzw. Bibliothek abrufen, die detaillierte Informationen über die optimalen Betriebsparameter und verfügbaren Steuerfunktionen des erkannten Endgeräts enthält. Dies ermöglicht eine besonders präzise und effiziente Anpassung der Steuerungsfunktionen an die spezifischen Anforderungen des jeweiligen Geräts. Diese Informationen können beispielsweise aus einem Datenspeicher des Akkumulators und/oder aus dem Internet abgerufen werden.

Die Erfindung betrifft ebenfalls einen Akkumulator für ein System, insbesondere wie es vorstehend beschrieben ist. Die beschriebenen Merkmale können hierbei einzeln oder in beliebiger Kombination verwirklicht sein. Der erfindungsgemäße Akkumulator ermöglicht, wie bereits beschrieben, beispielsweise eine aktive Steuerung einer Vielzahl möglicher Endgeräte. Der Akkumulator kann als zentrale Benutzerschnittstelle für eine benutzerdefinierte und "intelligente" Steuerung der mit ihm verbundenen Endgeräte dienen.

Auch betrifft die Erfindung eine Verwendung eines Akkumulators für ein System und/oder ein Verfahren, wie sie vorstehend beschrieben sind. Auch hier können die beschriebenen Merkmale einzeln oder in beliebiger Kombination verwirklicht sein. Die Verwendung eines Akkumulators, der in der Lage ist, Steuerungsdaten an ein Endgerät zu übertragen, hat die bereits im Zusammenhang mit dem erfindungsgemäßen System beschriebenen Vorteile.

Weitere Vorteile der Erfindung sind in den nachfolgenden Ausführungsbeispielen beschrieben. Es zeigen, jeweils schematisch:
- **Figur 1**: eine schematische Ansicht eines ersten Ausführungsbeispiels des erfindungsgemäßen Systems,
- **Figur 2**: eine schematische Ansicht eines zweiten Ausführungsbeispiels des erfindungsgemäßen Systems,
- **Figur 3**: eine schematische Ansicht eines dritten Ausführungsbeispiels des erfindungsgemäßen Systems, und
- **Figur 4**: eine schematische Ansicht eines dritten Ausführungsbeispiels des erfindungsgemäßen Systems,

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

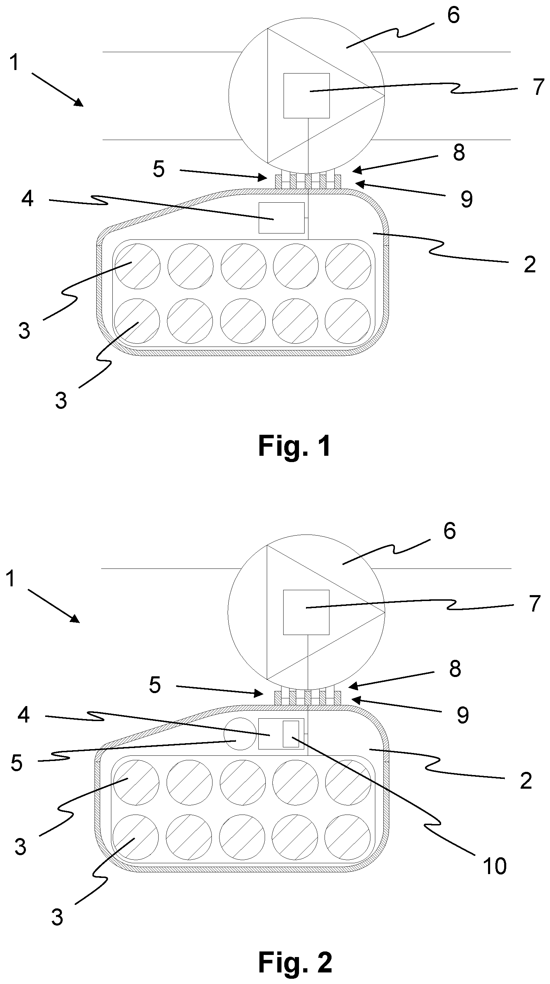

Figur 1 zeigt eine schematische Ansicht eines ersten Ausführungsbeispiels eines erfindungsgemäßen Systems 1. Das System 1 umfasst einen Akkumulator 2 und ein Endgerät 6, die zur Energieübertragung miteinander verbunden sind.

Der Akkumulator 2 weist insbesondere mehrere Akkumulatorzellen 3 auf, die der Aufnahme, Speicherung und Abgabe von elektrischer Energie dienen. Der Akkumulator 2 umfasst außerdem wenigstens eine Steuereinheit 4, die unter anderem beispielsweise der Steuerung und Überwachung des Akkumulators 2 dient. Außerdem umfasst der Akkumulator 2 eine Akkudatenschnittstelle 5 über die beispielsweise Steuerungsdaten übertragen werden können.

Das Endgerät 6 umfasst in diesem Ausführungsbeispiel eine Endgerätesteuereinheit 7 beispielsweise zur Steuerung und Überwachung des Endgeräts 6. Außerdem umfasst das Endgerät 6 eine Endgerätedatenschnittstelle 8 zur Datenübertragung.

Die Akkudatenschnittstelle 5 des Akkumulators 2 und die Endgerätedatenschnittstelle 8 des Endgeräts 6 ermöglichen insbesondere die Übertragung von Steuerungsdaten zwischen dem Akkumulator 2 und dem Endgerät 6, vorzugsweise zwischen der Steuereinheit 4 des Akkumulators 2 und der Endgerätesteuereinheit 7 des Endgeräts 6. Die Akkudatenschnittstelle 5 und die Endgerätedatenschnittstelle 8 sind in diesem Beispiel als drahtgebundene Schnittstellen ausgeführt, wobei sie hier beispielsweise in eine Energieschnittstelle 9 zur Energieübertragung zwischen dem Akkumulator 2 und dem Endgerät 6 integriert sind.

Die Steuereinheit 4 kann als IoT-Steuereinheit ausgebildet sein, was eine Einbindung des Akkumulators 2 in das Internet der Dinge ermöglicht und seinen Funktionsumfang erheblich erweitert. Bei einer drahtgebundenen Akkudatenschnittstelle 5 kann der Akkumulator 2 beispielsweise abseits des Betriebs des Endgeräts 6, insbesondere beim Aufladen, physisch mit weiteren Geräten verbunden werden und auf diese Weise Daten mit diesen Geräten austauschen.

Die Steuereinheit 4 kann ausgebildet sein, Steuerungsbefehle für die Endgerätesteuereinheit 7 zu erzeugen, wobei die aktive Steuerung des Endgeräts 6, insbesondere ausschließlich, von der Steuereinheit 4 übernommen wird. Hierzu können die Steuereinheit 4 und die Endgerätesteuereinheit 7 beispielsweise ein Master-Slave-System bilden, wobei die Steuereinheit 4 des Akkumulators 2 als Master und die Endgerätesteuereinheit 7 als Slave agiert. Dies gewährleistet, dass Steuerungsbefehle vom Akkumulator 2 priorisiert werden, und ermöglicht eine zentrale, vorhersehbare Steuerung des Systems.

Das Endgerät 6 ist in diesem Beispiel als akkubetriebene Pumpe ausgeführt. Die Steuereinheit 4 kann ausgebildet sein, Steuerungsbefehle für spezifische Funktionen des Endgeräts 6, also in diesem Beispiel der Pumpe zu erzeugen. Dies kann in diesem Beispiel eine Drehzahl der Pumpe und/oder abstraktere Betriebsparameter wie die Durchflussgeschwindigkeit und/oder den Druck umfassen.

Der Akkumulator 2 kann als zentrale Benutzerschnittstelle für verschiedene Endgeräte 6 verwendet werden. Benutzerdefinierte Einstellungen können somit bei der Verwendung verschiedener kompatibler Endgeräte 6 sofort zur Verfügung stehen, was besonders für professionelle Anwender von Vorteil ist, die mit verschiedenen Endgeräten 6 an unterschiedlichen Einsatzorten arbeiten.

Figur 2 zeigt eine schematische Ansicht eines zweiten Ausführungsbeispiels des erfindungsgemäßen Systems 1. Der Großteil der Merkmale stimmt mit dem ersten Ausführungsbeispiel überein. In diesem Ausführungsbeispiel umfasst der Akkumulator 2 jedoch zusätzlich eine Programmierschnittstelle 10 und eine zweite Akkudatenschnittstelle 5.

Die Programmierschnittstelle 10 ermöglicht es einem Benutzer beispielsweise, benutzerdefinierte Betriebsprogrammdaten für den Akkumulator 2 und das Endgerät 6 festzulegen. Beispielsweise kann der Benutzer für das als Pumpe ausgeführte Endgerät 6 komplexe Betriebsabläufe programmieren. Dies könnte etwa ein Zeitplan für den Pumpenbetrieb sein, bei dem zu bestimmten Tageszeiten unterschiedliche Durchflussmengen oder Drücke eingestellt werden. Die Programmierschnittstelle 10 kann insbesondere eine API (Application Programming Interface) bereitstellen, über die externe Anwendungen auf bestimmte Funktionen und Daten des Akkumulators 2 zugreifen können.

Die zweite Akkudatenschnittstelle 5 ist in diesem Beispiel als drahtlose Datenschnittstelle ausgeführt. Dies erweitert die Kommunikationsmöglichkeiten des Akkumulators 2. Die drahtlose Schnittstelle kann beispielsweise als Nahfunk- und/oder Fernfunkschnittstelle ausgebildet sein und Technologien wie Bluetooth, Wi-Fi, LoRaWAN oder 5G unterstützen. Hierdurch kann der Akkumulator 2, insbesondere auch während des Betriebs des Endgeräts 6, mit anderen Geräten kommunizieren. Dies ermöglicht beispielsweise eine Echtzeitüberwachung und -steuerung des Endgeräts 6 über ein Smartphone oder eine Integration in ein umfassendes Gebäudemanagement-System.

Durch die Kombination von der Programmierschnittstelle 10 und der drahtlosen Akkudatenschnittstelle 5 können besonders flexible und leistungsfähige IoT-Anwendungen realisiert werden. Ein Benutzer könnte beispielsweise ein Programm erstellen, das die Pumpleistung automatisch an Wetterdaten anpasst, die über das Internet abgerufen werden. Oder es könnte ein Alarmsystem implementiert werden, das bei ungewöhnlichen Betriebszuständen der Pumpe automatisch eine Benachrichtigung an den Benutzer sendet.

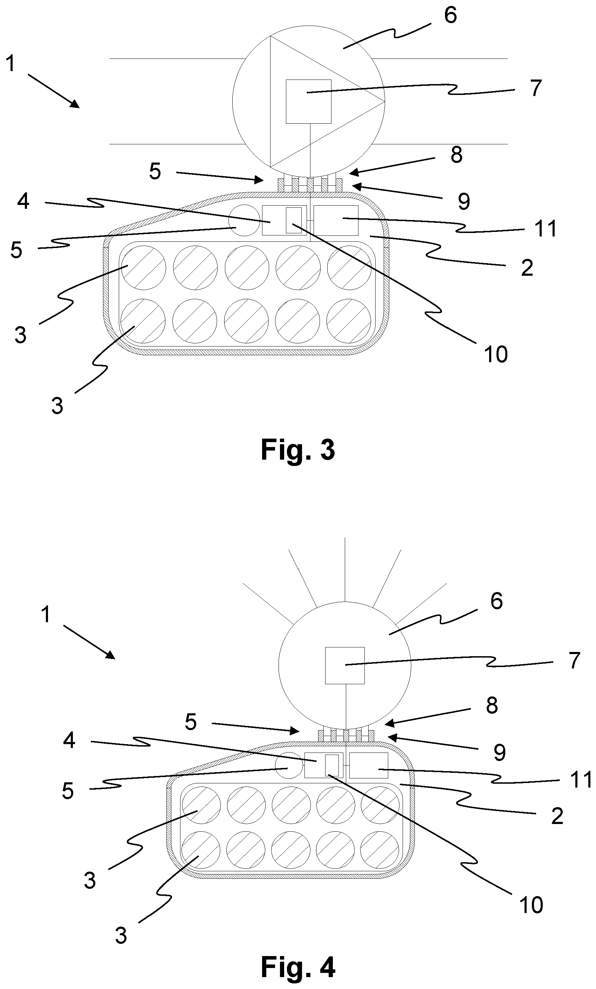

Figur 3 zeigt eine schematische Ansicht eines dritten Ausführungsbeispiels des erfindungsgemäßen Systems 1. Die Grundstruktur des Systems 1 entspricht weitgehend den vorherigen Ausführungsbeispielen. Als wesentliche Erweiterung umfasst der Akkumulator 2 in diesem Ausführungsbeispiel zusätzlich einen Datenspeicher 11.

Der Datenspeicher 11 kann beispielsweise vom Hersteller vorgegebene Software und grundlegende Betriebsparameter des Akkumulators 2 enthalten, was die Basisfunktionalität sicherstellt und beispielsweise Software-Updates zur Erweiterung des Funktionsumfangs ermöglicht. Darüber hinaus können im Datenspeicher 11 benutzerdefinierte Steuerungsdaten und Programmabläufe gespeichert werden, was einen auf die individuellen Bedürfnisse des Benutzers zugeschnittenen, teil- oder vollautomatisierten Betrieb des Systems 1 ermöglicht.

Zusätzlich oder alternativ kann der Datenspeicher 11 eine Datenbank mit Informationen zu möglichen Endgeräten 6 umfassen. Dies erlaubt es der Steuereinheit 4, die Kompatibilität eines angeschlossenen Endgeräts 6 zu prüfen und eventuell dessen spezifische Funktionen zu nutzen. Die Datenbank kann beispielsweise Informationen über optimale Betriebsparameter, verfügbare Steuerfunktionen bzw. Bibliotheken zur Ansteuerung der Funktionen von Endgeräten 6 und/oder Leistungsprofile verschiedener Endgeräte 6 enthalten.

Der Datenspeicher 11 kann außerdem zur Aufzeichnung von Betriebsdaten des Akkumulators 2 und des Endgeräts 6 genutzt werden, was eine langfristige Analyse des Systemverhaltens zur Optimierung der Betriebsabläufe und zur vorausschauenden Wartung ermöglicht. Beispielsweise könnte für das als Pumpe ausgeführte Endgerät 6 ein komplexer, auf historischen Daten basierender Betriebsablauf im Datenspeicher 11 hinterlegt werden. Die Steuereinheit 4 könnte dann auch ohne externe Verbindung diesen Ablauf optimiert steuern und gleichzeitig neue Betriebsdaten für künftige Optimierungen sammeln.

Bei Verwendung der drahtlosen Akkudatenschnittstelle 5 kann der Datenspeicher 11 zudem als Puffer für empfangene oder zu sendende Daten dienen, was eine zuverlässige Kommunikation auch bei zeitweilig unterbrochener Verbindung gewährleistet. Darüber hinaus können im Datenspeicher 11 Verschlüsselungsschlüssel und Sicherheitsprotokolle hinterlegt werden, um eine sichere Kommunikation des Akkumulators 2 mit anderen Geräten sicherzustellen.

Figur 4 zeigt eine schematische Ansicht eines vierten Ausführungsbeispiels des erfindungsgemäßen Systems 1. Der grundsätzliche Aufbau des Systems 1 entspricht den vorherigen Ausführungsbeispielen. In diesem Fall ist das Endgerät 6 jedoch als Lichtquelle ausgeführt.

Die Steuereinheit 4 des Akkumulators 2 kann in dieser Konfiguration beispielsweise spezifische Funktionen des als Lichtquelle ausgeführten Endgeräts 6 steuern. Dies kann insbesondere die Regulierung der Helligkeit bzw. Intensität oder bei entsprechender Ausstattung des Endgeräts 6 auch die Farbauswahl umfassen. Die Steuereinheit 4 kann hierbei komplexe Beleuchtungsszenarien umsetzen, die insbesondere über die Programmierschnittstelle 10 vom Benutzer definiert und/oder aus dem Datenspeicher 11 abgerufen werden.

Beispielsweise könnte für eine Arbeitsbeleuchtung ein Programm erstellt werden, das die Helligkeit und Farbtemperatur der Lichtquelle im Tagesverlauf anpasst, um zu jeder Tageszeit eine optimale Beleuchtung zu gewährleisten. Die drahtlose Akkudatenschnittstelle 5 ermöglicht es insbesondere, die Lichtquelle in ein vernetztes Beleuchtungssystem zu integrieren. So könnte die Beleuchtung beispielsweise automatisch an die Anwesenheit von Personen oder an Umgebungsbedingungen wie das Tageslicht angepasst werden. Auch eine Steuerung über Smartphone-Apps oder Sprachassistenten wäre denkbar. Für den Einsatz in der Eventbranche oder in der Fotografie könnten von einem Benutzer verschiedene Beleuchtungsszenarien programmiert werden, die je nach Bedarf abgerufen werden können. Die Steuereinheit 4 könnte dabei komplexe Lichtsequenzen steuern, etwa für Theateraufführungen oder Lichtshows.

Im Bereich der Sicherheitstechnik könnte die Lichtquelle als Teil eines Alarmsystems fungieren. Bei Auslösung eines Alarms könnte sie beispielsweise automatisch auf die maximale Helligkeit schalten oder ein Warnsignal durch Blinken geben. Für den Einsatz in der Pflanzenaufzucht könnte die Steuereinheit 4 spezielle Beleuchtungsprogramme steuern, die das Pflanzenwachstum optimieren. Dabei könnten verschiedene Lichtspektren und Beleuchtungszeiten je nach Wachstumsphase der Pflanzen automatisch eingestellt werden.

### Bezugszeichenliste

- 1: System
- 2: Akkumulator
- 3: Akkumulatorzelle
- 4: Steuereinheit
- 5: Akkudatenschnittstelle
- 6: Endgerät
- 7: Endgerätesteuereinheit
- 8: Endgerätedatenschnittstelle
- 9: Energieschnittstelle
- 10: Programmierschnittstelle
- 11: Datenspeicher

## Patentansprüche

1. System (1)
mit zumindest einem Akkumulator (2), insbesondere IoT-Akkumulator, wobei der Akkumulator (2) zumindest eine Steuereinheit (4) und zumindest eine Akkudatenschnittstelle (5) umfasst, und
mit einem Endgerät (6),
wobei das Endgerät (6) zumindest eine Endgerätesteuereinheit (7) und eine Endgerätedatenschnittstelle (8) umfasst,
und wobei der Akkumulator (2) und das Endgerät (6) zur Energieübertragung verbunden sind und wobei die Akkudatenschnittstelle (5) und die Endgerätedatenschnittstelle (8) zur insbesondere bidirektionalen Übertragung von Steuerungsdaten verbunden sind.

2. System (1) nach dem vorherigen Anspruch, **dadurch gekennzeichnet, dass** die zumindest eine Steuereinheit (4) eine IoT-Steuereinheit ist und/oder eine Programmierschnittstelle (10) umfasst.

3. System (1) nach dem einem der vorherigen Ansprüche, **dadurch gekennzeichnet, dass** die zumindest eine Steuereinheit (4) des Akkumulators ausgebildet ist, Steuerungsbefehle für die Endgerätesteuereinheit (7) zu erzeugen.

4. System (1) nach dem vorherigen Anspruch, **dadurch gekennzeichnet, dass** die Steuerungsbefehle Befehle für spezifische Funktionen des Endgeräts (6) umfassen.

5. System (1) nach dem einem der vorherigen Ansprüche, **dadurch gekennzeichnet, dass** die zumindest eine Steuereinheit (4) des Akkumulators (2) und die Endgerätesteuereinheit (7) ein Master-Slave-System bilden, wobei die Steuereinheit (4) als Master und die Endgerätesteuereinheit (7) als Slave ausgebildet ist.

6. System (1) nach dem einem der vorherigen Ansprüche, **dadurch gekennzeichnet, dass** die Akkudatenschnittstelle (5) und/oder die Endgerätedatenschnittstelle (8) als drahtgebundene und/oder drahtlose Datenschnittstelle ausgebildet sind.

7. System (1) nach dem einem der vorherigen Ansprüche, **dadurch gekennzeichnet, dass** der Akkumulator (2) einen Datenspeicher (11) umfasst.

8. System (1) nach einem der vorherigen Ansprüche, **dadurch gekennzeichnet, dass** der Datenspeicher (11), insbesondere in einer Datenbank, Informationen zu möglichen Endgeräten (6) umfasst.

9. System (1) nach einem der vorherigen Ansprüche, **dadurch gekennzeichnet, dass** der Akkumulator (2) als Arbeitsgeräteakkumulator, Gartengeräteakkumulator und/oder als Werkzeuggeräteakkumulator ausgebildet ist, wobei das Endgerät (6) insbesondere als Akkubohrschrauber, Akku-Schlagbohrmaschine, Akku-Winkelschleifer, Akku-Säge, Akku-Hammer, Akku-Rasenmäher, Akku-Trimmer, Akku-Heckenschere, Akku-Laubbläser, Akku-Pumpe, Akkustaubsauger, Akku-Hochdruckreiniger, Akku-Kehrmaschinen, E-Bike, E-Scooter, Elektroroller, Staubsaugerroboter, Kühlbox, Ventilator, Überwachungskamera, Alarmsystem und/oder Beleuchtungssystem ausgebildet ist.

10. Verfahren zum Betreiben eines Endgeräts (6) mit einem Akkumulator (2) in einem System (1), das gemäß einem oder mehreren der vorherigen Ansprüche ausgebildet ist,
**dadurch gekennzeichnet,**
**dass** Steuerungsdaten von zumindest einer Steuereinheit (4) des Akkumulators (2) über eine Akkudatenschnittstelle (5) und eine Endgerätedatenschnittstelle (8) an eine Endgerätesteuereinheit (7) des Endgeräts (6) übertragen und/oder Daten von der Endgerätesteuereinheit (7) des Endgeräts (6) über die Endgerätedatenschnittstelle (8) und die Akkudatenschnittstelle (5) an die Steuereinheit (4) des Akkumulators (2) übertragen werden.

11. Verfahren nach dem vorherigen Anspruch, **dadurch gekennzeichnet, dass** Steuerungsbefehle, insbesondere Befehle für spezifische Funktionen des Endgeräts (6), für die Endgerätesteuereinheit (7) von der zumindest einen Steuereinheit (4) erzeugt werden.

12. Verfahren nach dem vorherigen Anspruch, **dadurch gekennzeichnet, dass** die Steuerungsbefehle benutzerdefinierte Betriebsprogrammdaten umfassen.

13. Verfahren nach einem der vorherigen Ansprüche, **dadurch gekennzeichnet, dass** das Endgerät (6) und dessen spezifische Funktionen von der Steuereinheit (4) identifiziert werden.

14. Akkumulator (2) für ein System (1) nach einem oder mehreren der vorherigen Ansprüche.

15. Verwendung eines Akkumulators (2) für ein System (1) und/oder ein Verfahren nach einem oder mehreren der vorherigen Ansprüche.
